# FASCICULE DE BREVET EUROPEEN

(11) **EP 0 607 096 B1**
(45) Date de publication et mention de la délivrance du brevet: **07.07.1999**
(21) Numéro de dépôt: 94420007.0
(22) Date de dépôt: 11.01.1994
(51) Int. Cl.: C02F 3/34, C12M 1/26

(54) **Procédé de traitement biologique des eaux polluées, des boues et des sédiments et dispositif mettant en oeuvre le procédé**
Verfahren und Vorrichtung zur biologischen Behandlung von verschmutztem Wasser, Schlämmen und Ablagerungen
Process and apparatus for biological treatment of polluted water, sludges and deposits

(30) Priorité: 14.01.1993 FR 9300491
(43) Date de publication de la demande: 20.07.1994
(73) Titulaire: ARM BIOTECHNOLOGY, F-84800 Isle sur la Sorgues (FR)
(72) Inventeur: Arnaud, Thierry, F-84250 Le Thor (FR)
(74) Mandataire: Gasquet, Denis

(56) Documents cités:
- GB-A- 2 013 646
- US-A- 4 882 059
- US-A- 4 940 539
- US-A- 4 994 391

## Description

La présente invention concerne l'épuration biologique des eaux polluées, des boues et des sédiments et plus précisément un procédé de traitement des eaux par action biologique. Elle est aussi relative au dispositif destiné à mettre en oeuvre le procédé de l'invention.

La civilisation trépidante actuelle agissant sans réserve, ni sagesse, provoque des inconvénients dont on connaît les résultats néfastes et notamment ceux causés à la nature. Ainsi, la pollution des eaux, qui peut être du type domestique, industriel ou agricole, est un phénomène auquel l'homme doit impérativement faire face actuellement. L'eau étant l'un des éléments essentiels de la vie, il est d'une importance extrême et urgente de trouver des solutions efficaces pour traiter ce type de problème.

On connaît déjà un certain nombre de solutions pour réparer la détérioration de l'environnement, et par exemple des procédés physiques. Mais ce type de procédé ne fait que déplacer le problème. Il existe aussi des procédés chimiques qui pourraient être dans certains cas utilisés, mais ils entraînent bien entendu d'autres problèmes, et les problèmes ne sont, de ce fait, pas entièrement résolus.

Aussi, l'homme a récemment imaginé et mis au point des procédés biologiques de traitement en utilisant les caractéristiques qu'ont les bactéries à dégrader certaines substances, et notamment certaines substances toxiques, assurant ainsi la biodégradation des éléments polluants. On connait dans l'art antérieur des procédés de traitement biologique des eaux polluées comme par exemple les brevets GB.A.2 013 646, USA 4 882 059 ou USA-4.940.539, certains procédés utilisant des bactéries dans un état de croissance. Toutefois la plupart des méthodes de traitement biologiques actuelles consistent à utiliser des bactéries sélectionnées en fonction du type de pollution à dégrader, qui sont mises en contact avec l'eau dans leur état de conservation, généralement par épandage.

Ainsi le procédé de traitement biologique des eaux polluées, des boues et des sédiments impliquant l'utilisation d'un dispositif selon l'invention est caractérisé en ce qu'il consiste à utiliser des micro-organismes dans leur état de croissance. Les micro-organismes étant de tout type, à savoir, des bactéries, des champignons ou des levures permettant ainsi de traiter tout type de pollution.

Selon une caractéristique complémentaire du procédé, préalablement à la mise en présence des micro-organismes avec l'eau polluée, la boue et les sédiments, on exécute une étape préalable d'activation des micro-organismes pour les faire préalablement passer de leur état de conservation à leur état de croissance avant d'être utilisées. Ainsi, les micro-organismes dans leur état de conservation sont mélangées avec de l'eau pour constituer un liquide initial avant d'être activé pour constituer le liquide de traitement contenant les bactéries dans leur état de croissance.

Selon une disposition préférée, lors de l'étape préalable d'activation, le liquide initial est agité grâce à un agitateur, et maintenu à une température comprise entre 10°C et 70°C., tandis qu'ensuite, on exécute l'étape de distribution du liquide de traitement dans l'eau polluée, la boue ou les sédiments. La distribution se faisant de préférence par diffusion.

L'invention concerne un dispositif de traitement biologique des eaux polluées par utilisation de microorganismes qui comprend des moyens d'activation des micro-organismes pour les faire préalablement passer de leur état de conservation à leur état de croissance, et des moyens de commande et de régulation, et qui est caractérisé en ce que les moyens d'activation et les moyens de commande et de régulation sont disposés sur un chassis transportable et en ce qu'il comprend des moyens de distribution comprenant une pompe métrique alimentant un tuyau de diffusion destiné à être posé sur le fond du milieu à traiter.

Selon une autre caractéristique, le tuyau de diffusion est constitué d'un tuyau central dont la paroi cylindrique est percée de trous, ledit tube central étant enveloppé d'une enveloppe poreuse.

Selon un mode d'execution du dispositif, la pompe est une pompe métrique à vitesse variable permettant à la distribution du liquide de traitement de n'être pas instantanée.

Selon un mode d'exécution préféré, les moyens d'activation sont constitués par une cuve principale comprenant, dans sa partie inférieure, une hélice d'activation entraînée en rotation par un moto-réducteur, ladite cuve principale étant destinée à recevoir les microorganismes dans leur état de conservation, mélangés avec de l'eau pour constituer un liquide initial avant d'être activé pour constituer le liquide de traitement contenant les microorganismes dans leur état de croissance. Par ailleurs, le dispositif comprend des moyens de chauffage du liquide de traitement.

Selon une autre caractéristique, la cuve principale contenant de l'eau et les microorganismes, est disposée dans une cuve secondaire contenant de l'eau chauffée pour constituer un bain-marie.

De plus, le dispositif comporte un tuyau d'alimentation de gaz comprenant une vanne secondaire.

Selon une autre caractéristique complémentaire, le dispositif comprend des moyens permettant d'alimenter en gaz l'enceinte d'activation, et des moyens pour stopper cette alimentation. Ainsi, l'enceinte d'activation peut être reliée à une arrivée d'air permettant d'activer des micro-organismes du type aérobi dont la croissance est faite en présence d'oxygène. Par ailleurs, l'arrivée d'air selon une caractéristique du dispositif comprend une vanne de commande permettant de stopper l'arrivée d'air dans le cas où l'on désire faire croître d'autres micro-organismes d'un autre type et notamment des micro-organismes anaérobis. De plus, le dispositif permet de faire croître les micro-organismes du type anaérobi en présence d'autres gaz tels que de l'azote, du méthane, du gaz carbonique, du sulfure d'hydrogène ou autre.

D'autres caractéristiques et avantages de l'invention se dégageront de la description qui va suivre en regard des dessins annexés qui ne sont donnés qu'à titre d'exemples non limitatifs.

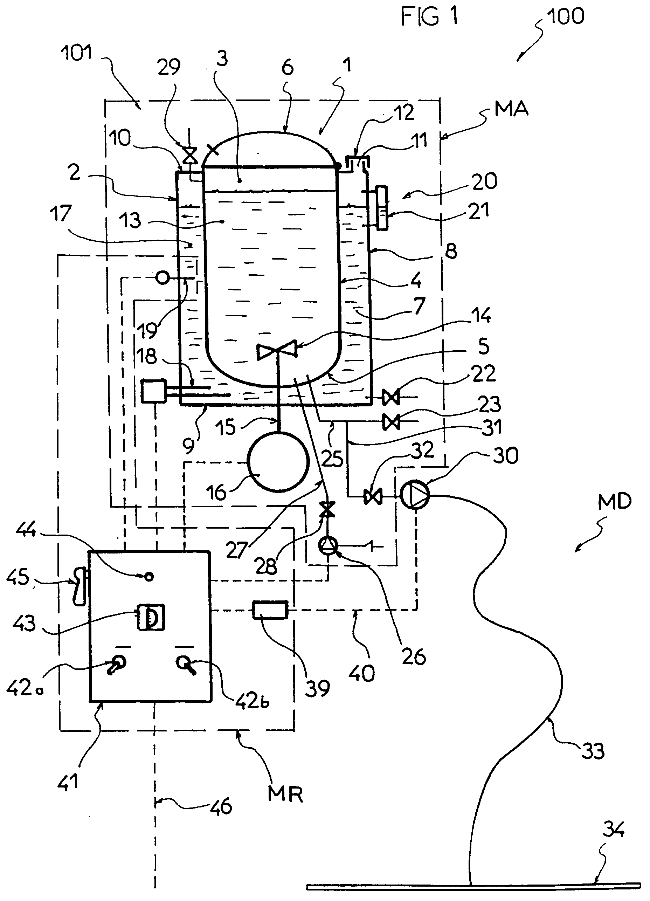

La figure 1 est une vue schématique du dispositif selon l'invention.
La figure 2 est une vue extérieure en perspective du dispositif selon l'invention.
La figure 3 est une vue partielle en perspective en coupe, avec arrachement du diffuseur destiné à être immergé.
La figure 4 est une graphique illustrant l'évolution de la concentration des bactéries en fonction du temps et des différentes étapes du procédé.

Les figures 5 et 6 illustrent une utilisation du dispositif pour un cours d'eau. La figure 5 est une vue en perspective, tandis que la figure 6 est une vue en coupe longitudinale.

Le procédé selon l'invention destiné à traiter la pollution des milieux aquatiques pollués, consiste à utiliser des micro-organismes, non pas dans leur état de conservation, mais dans leur état de croissance. Ainsi, avant de mettre les micro-organismes dans l'eau polluée, le procédé consiste à les placer dans un dispositif destiné à les activer pour les faire passer de leur état de conservation à leur état de croissance. Nous allons dans un premier temps, décrire le dispositif d'activation utilisé lors du procédé et dans un deuxième temps, nous décrirons ledit procédé.

Le dispositif selon l'invention portant la référence générale (100) comprend des moyens d'activation (MA), des moyens de commande et de régulation (MR) et des moyens de distribution (MD). Les moyens d'activation (MA) comprennent une cuve principale (1) disposée dans une cuve secondaire (2) et qui comprend des moyens d'agitation (14), des moyens de chauffage (17, 18), ainsi que des moyens de vidange (22, 23). La cuve principale ((1) forme une enceinte d'activation (3) et est constituée par une paroi périphérique (4) cylindrique prolongée vers le bas par une paroi inférieure (5) bombée. Ladite cuve est fermée de façon hermétique, à sa partie supérieure, par un couvercle (6) mobile entre une position ouverte et une position fermée. Ladite cuve principale (1) est logée dans une cuve secondaire (2) de dimensions supérieures, pour créer un espace intermédiaire (7) autour de ladite cuve principale (1). Par ailleurs, notons que la cuve secondaire (2) comprend une paroi périphérique latérale (8) ainsi qu'une paroi inférieure (9) et une paroi supérieure (10) qui comprend un trou de remplissage (11) fermé par un bouchon amovible (12).

L'enceinte d'activation (3) est destinée à recevoir les micro-organismes de tout genre tels que des bactéries, des champignons ou autres levures, mélangés avec de l'eau, afin que le liquide initial (13i) ainsi constitué y soit activé pour former le liquide bactériologique (13) de traitement. Dans la partie inférieure de l'enceinte d'activation (3) est disposée à cet effet une hélice d'agitation (14) dont l'axe de pivotement (15) vertical est entraîné en rotation par un moto-réducteur (16) situé sous la paroi inférieure (9) de la cuve secondaire (2). L'espace intermédiaire (7) entre les deux cuves est destiné à être rempli d'eau (17) que l'on chauffe par exemple aux environs de 30°C pour maintenir à une température suffisante favorisant l'activation des bactéries, le liquide initial (13i). A cet effet, l'eau (17) de l'espace intermédiaire est chauffée par une résistance chauffante (18) du type thermoplongeur, vissée à la partie inférieure de la cuve secondaire et qui est alimentée en courant électrique par l'intermédiaire des moyens de régulation (MR). Par ailleurs, une sonde (19) est également prévue dans la partie médiane de la cuve secondaire, permettant la détection de la température réelle de l'eau et un pilotage du chauffage, soit par l'arrêt, soit par la mise en route de la résistance chauffante (18). Ladite sonde (19) étant bien entendu reliée aux moyens de régulation (MR).

Notons aussi qu'un dispositif de visualisation (20) est disposé dans la partie supérieure de la cuve secondaire, permettant de contrôler en permanence le niveau de l'eau contenue dans l'espace intermédiaire (7), et peut ainsi en afficher la température. Ledit dispositif de visualisation (20) étant par exemple et de façon connue, constitué par un tube de verre (21). Sachant qu'en cas de manque d'eau, il est possible alors pour un opérateur, de pallier à ce défaut en faisant l'appoint d'eau nécessaire, par le trou de remplissage (11) après avoir retiré le bouchon (12).

Notons aussi qu'il est prévu deux vannes de vidange, une première vanne de vidange (22) disposée à la partie basse de l'espace intermédiaire (7) de la cuve secondaire (2), destinée à permettre la vidange, tandis qu'une deuxième vanne de vidange (23) est prévue sur un tuyau de vidange (25) relié à la partie inférieure de l'enceinte d'activation (3). Ladite seconde vanne permettant, en cas de besoin, la vidange partielle ou totale de la cuve principale d'activation (1). L'oxygénation nécessaire de l'enceinte d'activation (3) est réalisée par l'intermédiaire d'un pompe à air (26) reliée à la partie basse de la cuve principale par un tuyau d'alimentation en gaz comme, par exemple de l'air (27) et quicomprend une vanne secondaire éventuelle (28), tandis que la partie haute est reliée à une vanne supérieure de purge (29). Grâce au tuyau d'alimentation (27) et à la vanne de commande (28) il est possible de faire croître aussi bien des populations bactérielles aérobies en présence d'oxygène et en ouvrant la vanne (28) que d'autres populations telles que des bactéries anérobies en fermant ladite vanne pour stopper l'arrivée d'air. Bien entendu, on peut aussi prévoir une injection d'autres gaz, tels que du sulfure d'hydrogène, de l'oxygène pur ou du gaz carbonique voire même de l'azote, grâce à un branchement sur une bouteille pressurisée contenant un tel gaz. Le dispositif de l'invention permet donc de faire croître tout type de bactéries, et, bien entendu, des champignons, comme, par exemple, Aspergillus de Saccharomyces ou des levures, que ces micro-organismes soient aérobis ou anaérobis.

Le dispositif selon l'invention comprend des moyens de distribution (MD) du liquide de traitement (13), qui sont constitués par une pompe de distribution (30) reliée à la cuve principale par l'intermédiaire d'une dérivation (31) connectée au tuyau de vidange (25), laquelle dérivation comprend une vanne de distribution (32) permettant d'ouvrir ou de fermer l'alimentation de la pompe (30) en liquide de traitement (13). En aval, la pompe (30) alimente un tuyau de distribution (33) relié à une rampe de diffusion (34) constituée par un tuyau central (35) fermé aux deux extrémités, dont la paroi cylindrique (36) est percée de multiples trous (37). Afin d'assurer une distribution du liquide de traitement (13) par diffusion, ledit tuyau central (35) est entouré d'une membrane externe poreuse (38) réalisée dan un matériau poreux, tel que de la fibre ou tout autre composant poreux.

Selon une des caractéristiques de l'invention, la pompe (30) est une pompe métrique à vitesse variable permettant à la distribution du liquide de traitement, de durer un certain temps, et donc de n'être pas instantanée. En effet, à l'aide du dispositif, il est possible de programmer la durée de la diffusion du liquide de traitement. Ainsi, il est possible de prévoir que la diffusion dure par exemple une heure, permettant une distribution prolongée dudit liquide de traitement, assurant ainsi une meilleure répartition des bactéries dans le milieu à traiter.

Le dispositif comprend aussi des moyens de commande et de régulation (MR) destinés à commander d'une part la mise en route ou l'arrêt de la pompe (30) de distribution, ainsi que du moteur (16) d'agitation, et d'autre part, d'assurer la régulation de la température du bain-marie (7) par captage de la température par la sonde (19), permettant ainsi l'analyse et la mise en route ou l'arrêt de la résistance chauffante (18). Notons aussi que la régulation comprend également un minuteur coupe-circuit (39) disposé sur l'alimentation électrique (40) de la pompe (30), tandis qu'elle permet aussi la mise en route et l'arrêt de la pompe à air (26). Les moyens de commande et de régulation comprennent une armoire électrique (41) contenant une partie de circuits électriques et dont la façade comprend des boutons de commande (42a, 42b), un régulateur de température (43) et un ou plusieurs voyants (44). Un interrupteur général d'alimentation (45) est prévu pour mettre en route ou couper l'alimentation électrique générale (46).

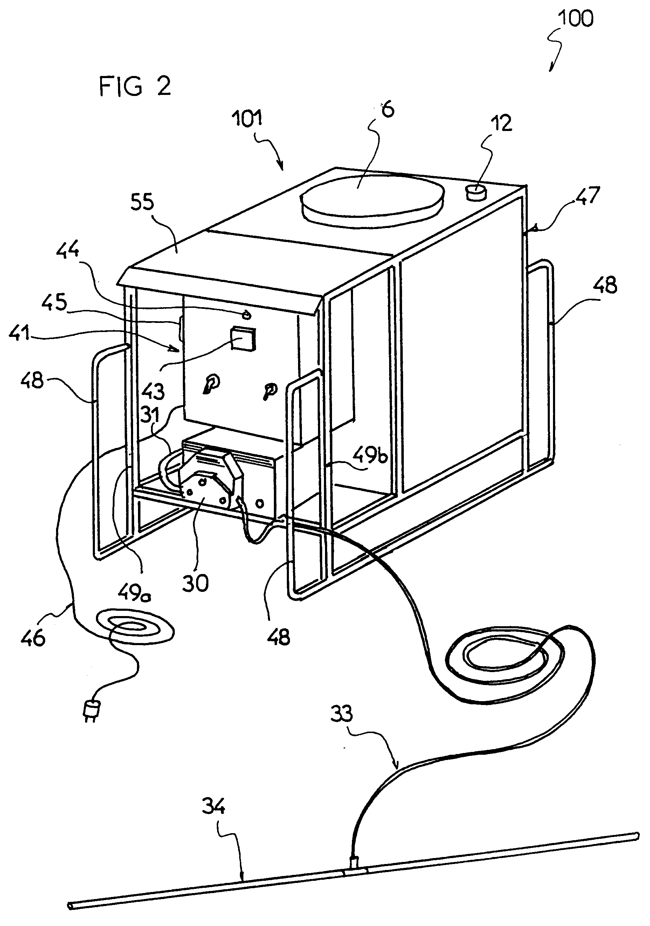

L'ensemble d'activation (101) constitué par les moyens d'activation (MA), les moyens de régulation (MR) et une partie des moyens de distribution, est disposé sur un châssis tubulaire (47) qui sert de structure de support pour les différents organes et comprend par exemple des poignées de préhension (48). Ainsi, le dispositif est mobile et peut être transporté à volonté et posé sur le sol, comme cela est illustré aux figures 2, 5 et 6. Par ailleurs, la structure support (47) protège vers l'avant (AV), l'armoire électrique (41) et la pompe (30) qui se trouvent être en retrait par rapport aux montants avant (49a, 49b). La protection vers le haut étant assurée par une paroi supérieure de protection (55).

Nous allons à présent décrire le procédé de traitement biologique selon l'invention qui consiste à utiliser le dispositif décrit précédemment.

Dans une étape préliminaire, on analyse l'eau destinée à être dépolluée afin de déterminer le type de bactéries à utiliser. L'analyse de l'eau étant hydraulique, physico-chimique, biologique et toxicologique. L'analyse hydraulique consiste à déterminer les surfaces, les volumes et les débits à traiter, ainsi que les caractéristiques du milieu aquatique, comme par exemple le lit d'une rivière ou les bassins d'une station d'épuration, tandis qu'une analyse physico-chimique et biologique de l'eau et du sédiment est faite pour sélectionner les bactéries en fonction des résultats obtenus. On choisit ainsi en fonction des usages, des complexes bactériens et des milieux à traiter, les bactéries permettant de satisfaire à diverses exigences. A savoir ayant un maximum d'efficacité, étant non pathogènes pour les faunes aquatiques ainsi que pour l'homme. Les bactéries ainsi sélectionnées étant prélevées dans des milieux aquatiques naturels et étant par exemple du genre : Pseudomonas, Flavobacterium, Serratia, Methanobacterium, Methanococcus, Methanosarcina, Micrococcus, Nocardia, Spirillum, Desulfovibrio, Azotobacter, Corynebacterium, Proteus, Nitrosococcus, Nitrosospira, Paracoccus, Thiotrix, Desulfotomaculum, Bacillus, Escherichia, Nitrosomonas, Nitrobacter, Beggiatoa, Thiobacillus, Leptothrix, Hydrogenomonas, Cellvibrio, Vibrio, Cytophaga, Sporocytophaga, Clostridium, Achromobacter, Alginomonas, Beneckea, Arthrobacter, et autres. On pourra bien entendu utiliser un ou plusieurs genres de bactéries simultanément. Notons que dans les milieux de culture donnant aux bactéries, leur état de conservation, il est possible de les conserver pendant 12 à 14 mois.

Les souches ayant été déterminées, les bactéries dans leur état de conservation sont diluées dans de l'eau pour constituer un liquide initial (13i) mis dans la cuve principale (1), pour y subir une étape préalable d'activation faisant passer les bactéries de leur état de conservation à leur état de croissance, avant d'être distribuées de façon automatique dans le milieu aquatique à traiter.

Pendant l'étape d'activation, le liquide initial (13i) contenu dans la cuve principale (1) est chauffé et maintenu à une température comprise entre 15°C et 40°C pour y être agité et brassé par la mise en rotation de l'hélice d'activation (14). Le dispositif (100) étant bien entendu mis en place sur le site à traiter.

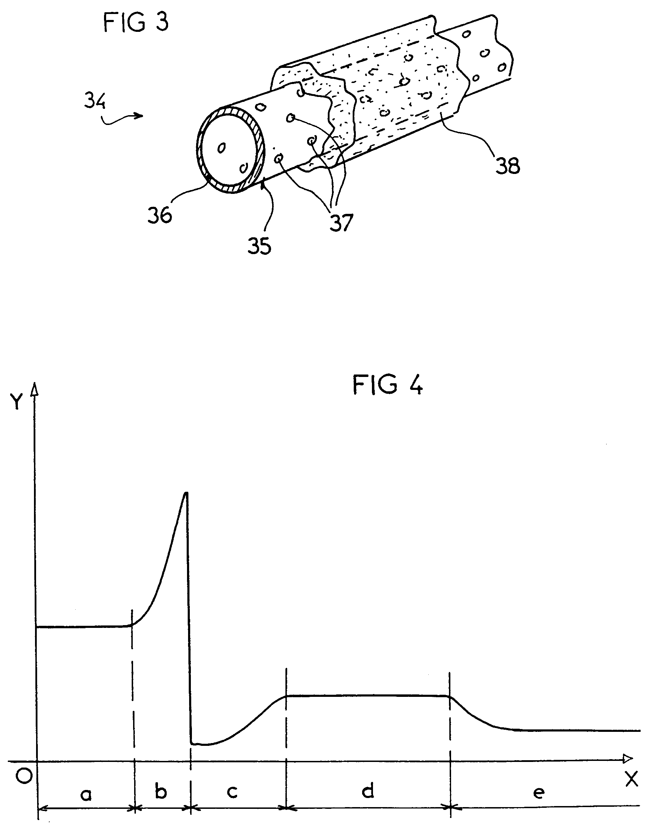

La figure 4 est un graphique montrant l'évolution de la concentration des bactéries en fonction du temps et des différentes étapes du procédé. En abscisse (x), il est mentionné le temps, tandis qu'en ordonnée (y) il est mentionné la concentration des bactéries. Pendant l'étape (a), les bactéries sont très concentrées dans leur milieu de conservation. L'étape (b) illustre l'étape d'activation des bactéries dans le dispositif d'activation (100). Pendant cette étape préalable d'activation, les bactéries passent de leur état de concentration à leur état de croissance, les bactéries ayant plusieurs niveaux physiologiques. Le passage de l'état de conservation à l'état de croissance se faisant par addition d'eau, agitation, maintien en température à une température suffisante, et par addition d'air, sachant qu'il est aussi possible de rajouter certains milieux de culture pour relancer la courbe de croissance.

Afin de maintenir le liquide bactériologique (13) à température suffisante, à savoir entre 15°C et 40°C, la cuve principale (1) est dans un bain-marie constitué par la cuve secondaire (2) dont l'eau (17) est chauffée par la résistance chauffante (18). Une fois la concentration obtenue, le liquide de traitement (13) comprenant les bactéries à l'état de croissance, est répandu par diffusion dans le milieu à traiter. Dans ledit milieu, les bactéries continuent à croître pendant un certain temps (c) et jusqu'à leur stade d'équilibre (d) traduisant une activité optimale. Pendant ce stade d'équilibre (d), les populations bactériennes restent stables : c'est la phase de traitement biologique maximal. Si les pollutions continuent à être renouvelées sur le site traité, les populations bactériennes restent au stade d'équilibre (d) jusqu'à stabilisation du milieu. Il y a alors parfois renouvellement périodique du traitement.

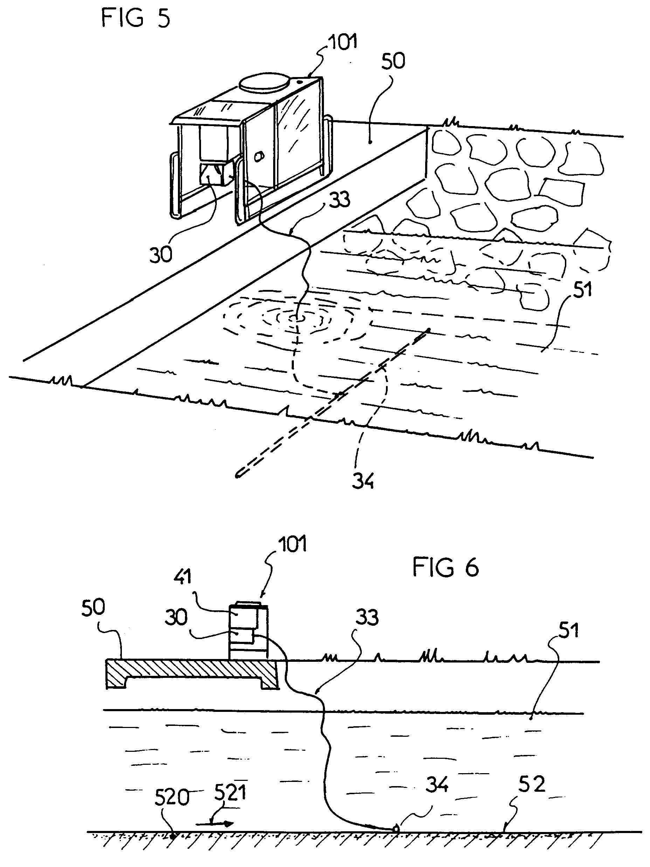

Selon une caractéristique complémentaire du procédé de traitement selon l'invention plus spécifiquement adapté au traitement des cours d'eau, mais pouvant être utilisé pour d'autres types de traitements, la distribution du complexe bactérien se fait par diffusion dans le milieu même à traiter grâce aux moyens de distribution (MD), comme cela est illustré aux figures 5 et 6. Ainsi, l'ensemble d'activation (101) est mis en place par exemple sur la berge ou sur un pont (50), tandis que la rampe de diffusion (34) est immergée dans l'eau polluée (51) pour être posée sur le fond (52), donc dans le milieu même et sur la couche de sédiments. La pompe (30) étant alors mise en action pour alimenter la rampe de diffusion (34). Le temps (t) de distribution étant calculé pour assurer une régulation du débit, et donc une distribution prolongée et progressive du liquide bactérien. Le tube de diffusion (34) est avantageusement posé sur le fond (52), car c'est une zone faisant interface entre le sédiment (520) et le courant (521). Ainsi,les bactéries ne sont pas entraînées directement par le courant et peuvent donc mieux se fixer sur ledit sédiment et agir ainsi efficacement.

Notons aussi que le dispositif d'activation pourrait être autonome et comprendre sa propre énergie électrique, comme par exemple des batteries, ou fournir son énergie électrique nécessaire grâce par exemple à un groupe de fourniture de courant électrique.

Il va de soi que les facteurs d'activation tels que la quantité d'eau, l'agitation, la température du milieu, l'adjonction d'air ou de gaz, et le temps d'activation sont autant de facteurs qui peuvent varier en fonction du métabolisme des bactéries utilisées.

Bien entendu, l'invention n'est pas limitée aux modes de réalisation décrits et représentés à titre d'exemples, mais elle comprend aussi tous les équivalents techniques ainsi que leurs combinaisons et permet de traiter aussi bien les eaux polluées que les boues ou les sédiments.

## Revendications

1. Dispositif de traitement biologique des eaux polluées, des boues et des sédiments, par utilisation de micro-organismes tels que des bactéries, des champignons ou des levures, qui comprend des moyens d'activation (MA) des micro-organismes pour les faire préalablement passer de leur état de conservation à leur état de croissance, et des moyens de commande et de régulation (MR), caractérisé en ce que les moyens d'activation (MA) et les moyens de commande et de régulation (MR) sont disposés sur un chassis transportable (47, 48) et en ce qu'il comprend des moyens de distribution (MD) comprenant une pompe métrique (30) alimentant un tuyau de diffusion (34) destiné à être posé sur le fond (52) du milieu à traiter.

2. Dispositif de traitement biologique des eaux polluées, des boues et des sédiments selon la revendication 1, caractérisé en ce que le tuyau de diffusion (34) est constitué d'un tuyau central (35) dont la paroi cylindrique (36) est percée de trous (37), ledit tube central étant enveloppé d'une enveloppe poreuse (38).

3. Dispositif de traitement biologique des eaux polluées, des boues et des sédiments selon l'une quelconque des revendications précédentes, caractérisé en ce que la pompe (30) est une pompe métrique à vitesse variable permettant à la distribution du liquide de traitement de n'être pas instantanée.

4. Dispositif de traitement biologique des eaux polluées, des boues et des sédiments selon l'une quelconque des revendications précédentes, caractérisé en ce que les moyens d'activation (MA) sont constitués par une cuve principale (1) comprenant, dans sa partie inférieure, une hélice d'activation (14) entraînée en rotation par un moto-réducteur (16) constituant un agitateur, ladite cuve principale étant destinée à recevoir les micro-organismes dans leur état de conservation, mélangés avec de l'eau pour constituer un liquide initial (13i) avant d'être activé pour constituer le liquide de traitement (13) contenant les micro-organismes dans leur état de croissance.

5. Dispositif de traitement biologique des eaux polluées, des boues et des sédiments selon l'une quelconque des revendications précédentes, caractérisé en ce qu'il comprend des moyens de chauffage (2, 7, 18) du liquide de traitement (13).

6. Dispositif de traitement biologique des eaux polluées, des boues et des sédiments selon la revendication 5, caractérisé en ce que la cuve principale (1) contenant de l'eau et les micro-organismes, est disposée dans une cuve secondaire (2) contenant de l'eau chauffée (17) pour constituer un bain-marie.

7. Dispositif de traitement biologique des eaux polluées, des boues et des sédiments selon la revendication 6, caractérisé en ce qu'il comprend un tuyau d'alimentation en gaz (27) comprenant une vanne secondaire (28).

8. Procédé de traitement biologique des eaux polluées, des boues et des sédiments impliquant l'utilisation du dispositif selon l'une quelconque des revendications précédentes, caractérisé en ce qu'il consiste à utiliser les micro-organismes tels que des bactéries, des champignons ou des levures dans leur état de croissance.

9. Procédé de traitement biologique des eaux polluées, des boues et des sédiments selon la revendication 8, caractérisé en ce que, préalablement à la mise en présence des micro-organismes avec l'eau polluée, les boues ou les sédiments, on exécute une étape préalable d'activation des micro-organismes pour les faire préalablement passer de leur état de conservation à leur état de croissance avant d'être utilisés.

10. Procédé de traitement biologique des eaux polluées, des boues et des sédiments selon la revendication 9, caractérisé en ce que les micro-organismes dans leur état de conservation sont mélangés avec de l'eau pour constituer un liquide initial (13i) avant d'être activés pour constituer le liquide de traitement (13) contenant les micro-organismes dans leur état de croissance.

11. Procédé de traitement biologique des eaux polluées, des boues et des sédiments selon la revendication 10, caractérisé en ce que, lors de l'étape préalable d'activation, le liquide initial (13i) est agité grâce à un agitateur (14).

12. Procédé de traitement biologique des eaux polluées, des boues et des sédiments selon la revendication 11, caractérisé en ce que, lors de l'étape préalable d'activation, le liquide d'activation (13i) est maintenu à une température comprise entre 10° C et 70° C.

13. Procédé de traitement biologique des eaux polluées, des boues et des sédiments selon l'une quelconque des revendications précédentes, caractérisé en ce que, après l'étape d'activation, on exécute l'étape de distribution du liquide de traitement (13) dans l'eau ou les boues, ou les sédiments pollués.

14. Procédé de traitement biologique des eaux polluées, des boues et des sédiments selon la revendication 13, caractérisé en ce que la distribution du liquide de traitement se fait par diffusion grâce à un tube de diffusion (34) posé sur le fond (52) du milieu à traiter, ledit diffuseur étant alimenté en liquide de traitement (13) par une pompe métrique (30).

## Claims

1. Device for the biological treatment of polluted water, sludge and sediment, by using micro-organisms such as bacteria, fungi or yeasts, which comprises means for activating (MA) the micro-organisms so that they are first of all made to pass from their holding state to their growing state, and means for control and regulation (MR), characterized in that the means of activation (MA) and the means of control and regulation (MR) are disposed on a transportable chassis (47, 48) and in that it comprises means of distribution (MD) comprising a metric pump (30) feeding a diffusion tube (34) intended to be positioned at the bottom (52) of the medium to be treated.

2. Device for the biological treatment of polluted water, sludge and sediment according to claim 1, characterized in that the diffusion tube (34) consists of a central tube (35), the cylindrical wall (36) of which is pierced by holes (37), the said central tube being surrounded by a porous envelope (38).

3. Device for the biological treatment of polluted water, sludge and sediment according to either of the preceding claims, characterized in that the pump (30) is a variable speed metric pump so that the distribution of treatment liquid is not instantaneous.

4. Device for the biological treatment of polluted water, sludge and sediment according to any one of the preceding claims, characterized in that the means of activation (MA) consist of a main tank (1) containing, in its lower part, an activating helix (14) driven in rotation by a geared-motor (16) constituting a stirrer, the said main tank being designed to receive the micro-organisms in their holding state, mixed with water so as to constitute an initial liquid (13i) before being activated so as to constitute the treatment liquid (13) containing micro-organisms in their growing state.

5. Device for the biological treatment of polluted water, sludge and sediment according to any one of the preceding claims, characterized in that it includes means (2, 7, 18) for heating the treatment liquid (13).

6. Device for the biological treatment of polluted water, sludge and sediment according to claim 5, characterized in that the main tank (1) containing water and micro-organisms, is disposed in a secondary tank (2) containing heated water (17) so as to constitute a water bath.

7. Device for the biological treatment of polluted water, sludge and sediment according to claim 6, characterized in that it includes a gas supply tube (27) including a secondary valve (28).

8. Process for the biological treatment of polluted water, sludge and sediment involving the use of the device according to any one of the preceding claims, characterized in that it consists of the use of micro-organisms such as bacteria, fungi or yeasts in their growing state.

9. Process for the biological treatment of polluted water, sludge and sediment according to claim 8, characterized in that before the micro-organisms are put into contact with polluted water, sludge or sediment, a preliminary activation step is carried out on the micro-organisms so that they are first of all made to pass from their holding state to their growing state before being used.

10. Process for the biological treatment of polluted water, sludge and sediment according to claim 9, characterized in that the micro-organisms in their holding state are mixed with water so as to constitute an initial liquid (13i) before being activated so as to constitute the treatment liquid (13) containing the micro-organisms in their growing state.

11. Process for the biological treatment of polluted water, sludge and sediment according to claim 10, characterized in that, during the preliminary activation step, the initial livid (13i) is stirred by means of a stirrer (14).

12. Process for the biological treatment of polluted water, sludge and sediment according to claim 11, characterized in that, during the preliminary activation step, the activating liquid (13i) is kept at a temperature of between 10°C and 70°C.

13. Process for the biological treatment of polluted water, sludge and sediment according to any one of the preceding claims, characterized in that, after the activation step, a step is carried out in which the treatment liquid (13) is distributed in the polluted water or sludge or sediment.

14. Process for the biological treatment of polluted water, sludge and sediment according to claim 13, characterized in that the treatment liquid is distributed by diffusion by means of a diffusion tube (34) positioned at the bottom (52) of the medium to be treated, the said diffuser being fed with treatment liquid (13) by a metric pump (30).

## Patentansprüche

1. Vorrichtung zur biologischen Behandlung von verschmutztem Wasser, Schlämmen und Ablagerungen durch Verwendung von Mikroorganismen, wie beispielsweise Bakterien, Pilze oder Hefepilze, bestehend aus Mitteln zur Aktivierung (MA) der Mikroorganismen, um sie vorher von ihrem Konservierungszustand in ihren Wachstumszustand übergehen zu lassen, und Mitteln zur Steuerung und Regelung (MR), dadurch gekennzeichnet, daß die Mittel zur Aktivierung (MA) und die Mittel zur Steuerung und Regelung (MR) auf einem transportierbaren Gestell (47, 48) angeordnet sind, und daß sie Mittel zur Verteilung (MD) umfaßt, die eine metrische Pumpe (30) umfassen, die ein Diffusionsrohr (34) versorgt, das dazu bestimmt ist, auf den Boden (52) des zu behandelnden Mediums gelegt zu werden.

2. Vorrichtung zur biologischen Behandlung von verschmutztem Wasser, Schlämmen und Ablagerungen nach Anspruch 1, dadurch gekennzeichnet, daß das Diffusionsrohr (34) von einem zentralen Rohr (35) gebildet wird, dessen zylindrische Wandung (36) mit Löchern (37) durchbohrt ist, wobei dieses zentrale Rohr mit einer porösen Hülle (38) umhüllt ist.

3. Vorrichtung zur biologischen Behandlung von verschmutztem Wasser, Schlämmen und Ablagerungen nach einem der vorhergehenden Ansprüche, dadurch gekennzeichnet, daß die Pumpe (30) eine metrische Pumpe mit variabler Geschwindigkeit ist, die nicht nur eine augenblickliche unverzügliche Verteilung der Behandlungsflüssigkeit ermöglicht.

4. Vorrichtung zur biologischen Behandlung von verschmutztem Wasser, Schlämmen und Ablagerungen nach einem der vorhergehenden Ansprüche, dadurch gekennzeichnet, daß die Mittel zur Aktivierung (MA) von einer Hauptwanne (1) gebildet werden, die in ihrem unteren Teil eine Schraube zur Aktivierung (14) umfaßt, die von einem Untersetzungsgetriebe (16) in Drehung versetzt wird und so eine Rührvorrichtung bildet, wobei diese Hauptwanne dazu bestimmt ist, die Mikroorganismen in ihrem Konservierungszustand aufzunehmen, gemischt mit Wasser, um eine Ausgangsflüssigkeit (13i) zu bilden, bevor sie belebt werden, um die Behandlungsflüssigkeit (13) zu bilden, die Mikroorganismen in ihrem Wachstumszustand enthält.

5. Vorrichtung zur biologischen Behandlung von verschmutztem Wasser, Schlämmen und Ablagerungen nach einem der vorhergehenden Ansprüche, dadurch gekennzeichnet, daß sie Mittel zum Erhitzen (2, 7, 18) der Behandlungsflüssigkeit (13) umfaßt.

6. Vorrichtung zur biologischen Behandlung von verschmutztem Wasser, Schlämmen und Ablagerungen nach Anspruch 5, dadurch gekennzeichnet, daß die Hauptwanne (1), die das Wasser und die Mikroorganismen enthält, in einer zweiten Wanne (2) angeordnet ist, die erhitztes Wasser (17) enthält, um ein Wasserbad zu bilden.

7. Vorrichtung zur biologischen Behandlung von verschmutztem Wasser, Schlämmen und Ablagerungen nach Anspruch 6, dadurch gekennzeichnet, daß sie ein Gaszuleitungsrohr (27) umfaßt, das ein zweites Ventil (28) aufweist.

8. Verfahren zur biologischen Behandlung von verschmutztem Wasser, Schlämmen und Ablagerungen unter Verwendung der Vorrichtung nach einem der vorhergehenden Ansprüche, dadurch gekennzeichnet, daß es darin besteht, die Mikroorganismen, wie beispielsweise Bakterien, Pilze oder Hefepilze in ihrem Wachstumszustand zu verwenden.

9. Verfahren zur biologischen Behandlung von verschmutztem Wasser, Schlämmen und Ablagerungen nach Anspruch 8, dadurch gekennzeichnet, daß man vor Kontaktierung der Mikroorganismen mit verschmutztem Wasser, Schlämmen oder Ablagerungen eine vorherige Stufe zur Aktivierung der Mikroorganismen durchführt, um sie zuvor von ihrem Konservierungszustand in ihren Wachstumszustand zu bringen, bevor sie verwendet werden.

10. Verfahren zur biologischen Behandlung von verschmutztem Wasser, Schlämmen und Ablagerungen nach Anspruch 9, dadurch gekennzeichnet, daß die Mikroorganismen in ihrem Konservierungszustand mit Wasser gemischt werden, um eine Ausgangsflüssigkeit (13i) zu bilden, bevor sie belebt werden, um die Behandlungsflüssigkeit (13) zu bilden, die die Mikroorganismen in ihrem Wachstumszustand enthält.

11. Verfahren zur biologischen Behandlung von verschmutztem Wasser, Schlämmen und Ablagerungen nach Anspruch 10, dadurch gekennzeichnet, daß bei der vorhergehenden Aktivierungsstufe die Ausgangsflüssigkeit (13i) mit einer Rührvorrichtung (14) bewegt wird.

12. Verfahren zur biologischen Behandlung von verschmutztem Wasser, Schlämmen und Ablagerungen nach Anspruch 11, dadurch gekennzeichnet, daß bei der vorhergehenden Aktivierungsstufe die Aktivierungsflüssigkeit (13i) auf einer Temperatur zwischen 10 °C und 70 °C gehalten wird.

13. Verfahren zur biologischen Behandlung von verschmutztem Wasser, Schlämmen und Ablagerungen nach einem der vorhergehenden Ansprüche, dadurch gekennzeichnet, daß nach der Aktivierungsstufe den Schritt der Verteilung der Behandlungsflüssigkeit (13) in dem verschmutzten Wasser oder den Schlämmen oder Ablagerungen vorgenommen wird.

14. Verfahren zur biologischen Behandlung von verschmutztem Wasser, Schlämmen und Ablagerungen nach Anspruch 13, dadurch gekennzeichnet, daß die Verteilung der Behandlungsflüssigkeit durch Diffusion durch ein Diffusionsrohr (34) erfolgt, das auf dem Boden (52) des zu behandelnden Mediums angeordnet ist, wobei das Diffusionsrohr von der metrischen Pumpe (30) mit Behandlungsflüssigkeit (13) versorgt wird.
